# EUROPEAN PATENT APPLICATION

(11) **EP 3 819 614 A1**
(43) Date of publication of application: **12.05.2021**
(21) Application number: 19830321.6
(22) Date of filing: 01.07.2019
(51) Int. Cl.: G01J 3/18, G02B 5/18, G02B 7/00, G02B 23/00, G02B 27/42

(54) **SPECTROSCOPE, ASTRONOMICAL TELESCOPE AND SPECTROSCOPE PRODUCTION METHOD**

(30) Priority: 02.07.2018 JP 2018126124
(71) Applicant: Kyocera Corporation, Kyoto-shi, Kyoto 612-8501 (JP)
(72) Inventor: IIDA,Naoto, Kyoto-shi, Kyoto 612-8501 (JP); MANOME,Takeo, Kyoto-shi, Kyoto 612-8501 (JP); MUKAI,Shinji, Kyoto-shi, Kyoto 612-8501 (JP)
(74) Representative: Viering, Jentschura & Partner mbB Patent- und Rechtsanwälte
(86) International application number: PCT/JP2019/026101
(87) International publication number: WO 2020/009061

(57) **Abstract**

The spectroscope of the present disclosure includes a first base member comprising a first surface having a diffraction grating and a second surface which is a rear surface of the first surface, a second base member comprising a third surface having a diffraction grating and a fourth surface which is a rear surface of the third surface, a holder comprising a lid having first holes and second holes opposed to the fourth surface, and arranging and fixing the first base member and the second base member, and a fixing member disposed in the second hole, connecting the fourth surface and the lid, and fixing the second base member to the holder in a noncontact manner.

## Description

### TECHNICAL FIELD

The present disclosure relates to a spectroscope, an astronomical telescope having the spectroscope, and a method for manufacturing the spectroscope.

### BACKGROUND ART

Conventionally, a spectroscope provided with a base member having a diffraction grating has been used for an astronomical telescope. Generally, to obtain a highly sensitive and accurate spectroscope, it is necessary to increase an area of the diffraction grating formed on a base member in a rectangular parallelepiped shape. However, there is a manufacturing limit to the size of one base member, and therefore, the size of the base member can be substantially increased by disposing a plurality of base members side by side (see Patent Document 1 and Non-Patent Document 1).

In the spectroscope in which a plurality of the base members are disposed side by side, it is necessary to precisely control a posture of each base member, that is, an angle formed by surfaces on which the diffraction gratings are formed is within a predetermined range. In Non-Patent Document 1, the base member is held in a holder so that the location and the angle can be adjusted. In such a constitution, it is necessary to adjust the locations of the two base members when the spectroscope is used. On the contrary, to obtain a constitution in which the base members are fixed to the holder to make the locational relationship between the base member and the holder once determined invariably, it is necessary to fix each base member accurately.

### PRIOR ART DOCUMENTS

### PATENT DOCUMENTS

[Patent Document 1] Japanese Patent Unexamined Publication No. H6-94527

[Non-Patent Document 1] First high-efficiency and high-resolution (R=80,000) NIR spectroscopy with high-blazed echelle grating: WINERED HIRES modes (Shogo Otsubo et al.)

### SUMMARY OF THE INVENTION

The spectroscope of the present disclosure comprises a first base member, a second base member, a holder, and a fixing member. The first base member has a first surface having a diffraction grating and a second surface which is a rear surface of the first surface. The second base member has a third surface having a diffraction grating and a fourth surface which is a rear surface of the third surface. The holder has a lid having first holes and second holes opposed to the fourth surface and arranges and fixes the first base member and the second base member. The fixing member is disposed in the second hole, connects the fourth surface and the lid, and fixes the second base member to the holder in a noncontact manner.

Further, the method for manufacturing the spectroscope of the present disclosure is a method for manufacturing the above-mentioned spectroscope and comprises the following steps. One of the steps is a step of fixing the first base member to the holder. One of the steps is a step of disposing the second base member to the holder. One of the steps is a step of connecting a posture adjusting member, which is a part of a posture adjusting mechanism, to the fourth surface through the first hole. One of the steps is a step of adjusting the location of the second base member according to the location of the first base member by using the posture adjusting member. One of the steps is a step of disposing the fixing member in the second hole. One of the steps is a step of fixing the fourth surface and the lid via the fixing member. One of the steps is a step of removing at least a part of the posture adjusting member.

### BRIEF DESCRIPTION OF THE DRAWINGS

Fig. 1 is a schematic diagram showing an example of an astronomical telescope having the spectroscope of the present embodiment.
Fig. 2 is a perspective view of a base member and a holder which constitute the spectroscope shown in Fig. 1.
Fig. 3 is a perspective view showing a posture adjustment mechanism having a posture adjustment member and the spectroscope shown in Fig. 2.
Fig. 4 is a schematic diagram showing a method for manufacturing the spectroscope of the present embodiment.

### PREFERRED EMBODIMENTS FOR CARRYING OUT THE INVENTION

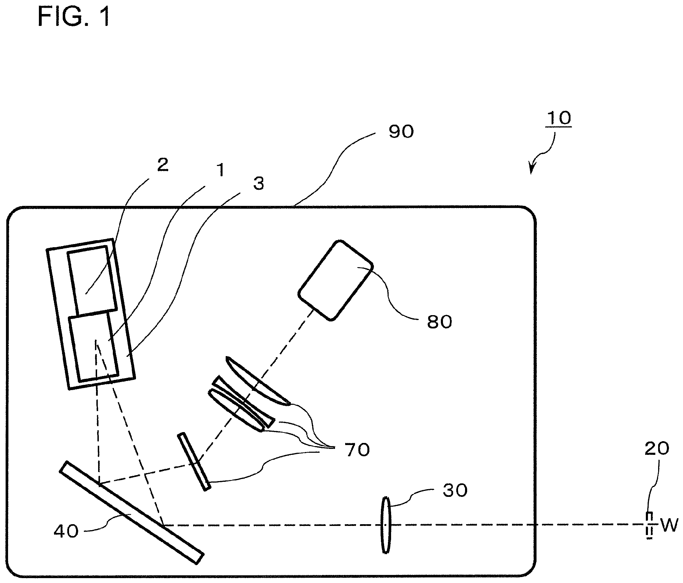

The spectroscope of the present disclosure will be described with reference to the figures, taking a spectroscope for an astronomical telescope as an example. Fig. 1 is a schematic diagram showing an example of an astronomical telescope having the spectroscope of the present embodiment.

An astronomical telescope 10 has a slit 20 which limits electromagnetic waves W from the outside to pass through, a lens 30 which parallelizes the electromagnetic waves W that have passed through the slit 20, a mirror 40 coated with gold on the surface to reflect the parallelized electromagnetic waves W, base members (1, 2) disposed side by side in series in a deviated state in a width direction on a holder 3, and having diffraction gratings (not shown in Fig. 1) that disperse the reflected electromagnetic waves W by each wavelength, the holder 3 fixing the base members (1, 2), lens groups 70 disposed sequentially along an optical path of the spectroscopy, and a detector (an infrared array) 80. These components are housed in a low temperature holding mechanism 90 having a window part, so that temperature variations are suppressed. The spectroscope in Fig. 1 has the base members (1, 2) and the holder 3.

The electromagnetic waves W incident from the outside of the low temperature holding mechanism 90 toward the spectroscope advance along the optical path, are reflected on a first surface 1a and a third surface 2a, and become reflected waves dispersed by each wavelength, and the reflected waves are imaged by the detector 80, and the information of the object to be observed can be analyzed.

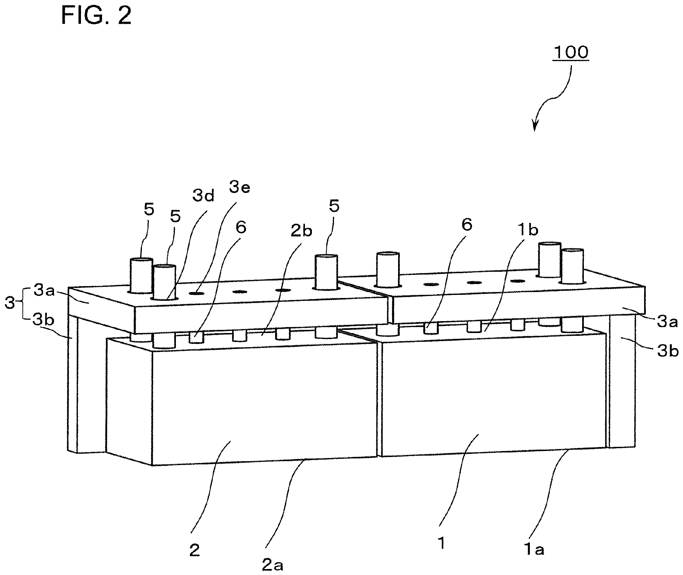

Fig. 2 is a perspective view of a base member and a holder constituting the spectroscope shown in Fig. 1. As shown in Fig. 2, the base members (1, 2) are made of a first base member 1 and a second base member 2, both of which have rectangular parallelepiped shapes. The first base member 1 and the second base member 2 are, for example, rectangular parallelepipeds having a length of 190 mm to 210 mm, a height of 50 mm to 70 mm, and a width of 50 mm to 70 mm, respectively.

The first base member 1 has a first surface 1a on which a diffraction grating is formed and a second surface 1b which is a rear surface thereof, and the second base member 2 has a third surface 2a on which a diffraction grating is formed and a fourth surface 2b which is a rear surface thereof. Then, the base members (1, 2) are housed in the holder 3 so that the first surface 1a and the third surface 2a are exposed and are fixed side by side in series in a deviated state in a width direction. The angle formed by the first surface 1a and the third surface 2a, which indicate the relative locations of the first base member 1 and the second base member 2, requires an adjustment in three dimensions (three different directions and three different planes), for example, in 2 seconds or less.

The holder 3 has a lid 3a opposed to the second surface 1b and the fourth surface 2b, and four side plates 3b supporting the lid 3a, and has an internal space in which sides of the first surface 1a and the third surface 2a are open and the first base member 1 and the second base member 2 are housed.

In Fig. 2, some of the side plates 3b are not shown for the purpose of explanation.

Further, the lid 3a may consist of a plurality of plates. The holder 3 may be made by forming the lid 3a and the four side plates 3b separately and combining them or may manufacture them integrally. Additionally, a fastener (not shown) for fixing the first base member 1 and the second base member 2 so as to cover a part of the respective outer edges of the first surface 1a and the third surface 2a can be attached to the holder 3.

The rectangular parallelepiped first base member 1 and the rectangular parallelepiped second base member 2 are shown in Fig. 2, but the shapes of the base members (1, 2) are not limited to this.
The lid 3a and the side plates 3b are fixed by forming a coil insert (not shown) on the lid 3a or the side plates 3b, and inserting and fastening a bolt (not shown) to the coil insert. The material of the bolt is, for example, a low thermal expansion metal such as Fe-36 wt% Ni alloy (trade name Invar) and Fe-32 wt% Ni-4 wt% Co alloy (trade name Super Invar).

The lid 3a has first holes 3d and second holes 3e opposed to the fourth surface 2b, and a posture adjusting member 5 for adjusting the location of the second base member 2 to the location of the first base member 1 is disposed through the first hole 3d, and a fixing member 6 is disposed in the second hole 3e.

As shown in Fig. 2, a plurality of first holes 3d and a plurality of second holes 3e may be provided.

By having the plurality of first holes 3d and the plurality of second holes 3e, it is easy to finely adjust the location and angle of the second base member 2, and in fixing to the holder 3 after the fine adjustment, the fine adjusted location and angle are less likely to be shifted.

Additionally, a hole for passing the posture adjusting member 5 and a hole for disposing the fixing member 6 may also be formed on the side plates 3b.

The posture adjusting member 5 has a function of adjusting at least one of the locations and angles of the second grating 2 according to the location and angle of the first grating 1 before fixing the second grating 2 to the holder 3. The posture adjusting member 5 can also function as a member for lifting the second grating 2. The side of the tip end may be directly adhered to the second grating 2 by an adhesive, and the side opposed to the tip end may be fastened to a plate-shaped member described later with a bolt or the like.

The fixing member 6 connects the fourth surface 2b of the second base member 2 and the lid 3a, and fixes the second base member 2 to the holder 3 in a noncontact manner. The shape of the fixing member 6 is preferably, for example, a cylindrical or columnar shape, and is made of the same material as the holder 3.

In the first base member 1 and the second base member 2, the location and angle of the first surface 1a and the third surface 2a are adjusted in such a way that the angle formed by both reflected waves when the parallel electromagnetic waves W are incident is, for example, within 2 seconds, preferably within 1 second.

With the above constitution, the second base member 2 can be precisely fixed by using the fixing member 6 after the location and angle are precisely adjusted by using the posture adjusting member 5.

Additionally, among the outer surfaces of the holder 3, when the first surface a and the third surface 2a are viewed in a plan view, the outer surface of the side plates 3b surrounding the first surface 1a and the third surface 2a may have a black film made of an acrylic resin as a main component. The outer surface of the holder 3 may have a black film other than the part surrounding the first surface 1a and the third surface 2a.

Further, the inner surface of the holder 3 may have a black film containing an acrylic resin as a main component from the first surface 1a and the third surface 2a to at least 1 mm in a depth direction.

Since the black film containing the acrylic resin as the main component has a low reflectance from an ultraviolet region to a near infrared region, an absorption efficiency of the electromagnetic wave W, which is partially scattered by the diffraction grating and becomes noise, becomes high, and thus the accuracy of analysis can be improved. The effect is particularly high when the surface of the ceramic shows a bright color.

The acrylic resin contained in the film may be identified by using a Fourier transform infrared spectrophotometer (FTIR).

Moreover, the black film may contain magnesium, aluminum, and silicon in addition to the acrylic resin, and the total content of these elements is preferably 1% by mass or less.

The first base member 1 and the second base member 2 are preferably glass having a mean linear expansion coefficient within ±2×10⁻⁶/K at 40 °C to 400 °C.

The holder 3 and the fixing member 6 are ceramics having a mean linear expansion coefficient within ±2×10⁻⁶/K at 40 °C to 400 °C at a use temperature (for example, a room temperature). Examples of such ceramics include ceramics containing cordierite, lithium aluminosilicate, potassium zirconium phosphate or mullite as a main component.

If the base members (1, 2), the holder 3 and the fixing member 6 are made of such a low thermal expansion material, changes in shapes are small even if they are exposed to temperature changes, so that the member made of the low thermal expansion material has a high reliability.

The ceramics containing cordierite as a main component may contain Ca of 0.4% by mass or more and 0.6% by mass or less in terms of CaO, Al of 2.3% by mass or more and 3.5% by mass or less in terms of Al₂O₃, and Mn and Cr of 0.6% by mass or more and 0.7% by mass or less in terms of MnCr₂O₄. This ceramic can make a mean linear expansion coefficient become ±20×10⁻⁹/K or less.

The ceramics containing lithium aluminosilicate as a main component may contain 20% by mass or less of silicon carbide.

Additionally, as an example of glass, glass containing titanium silicic acid as a main component can be listed.

Here, when the holder 3 and the fixing member 6 are made of ceramics, the mean linear expansion coefficient may be calculated in accordance with JIS R 1618: 2002.

When the base members (1, 2) are made of glass, the mean linear expansion coefficient may be calculated in accordance with JIS R 3251: 1995.

When the mean linear expansion coefficients of the holder 3 and the fixing member 6 are ±1×10⁻⁶/K or less, the measurement may be made by using an optical heterodyne 1 optical path interferometer.

Here, the main component in the ceramics means a component that occupies 60% by mass or more of the total 100% by mass of the components constituting the ceramics of interest. The components constituting the ceramics may be identified by using an X-ray diffractometer (XRD). After identifying the components, the content of each component may be converted to the identified components by determining the content of the elements that constitute the component by using an X-ray fluorescence (XRF) or an ICP emission spectrometric apparatus.

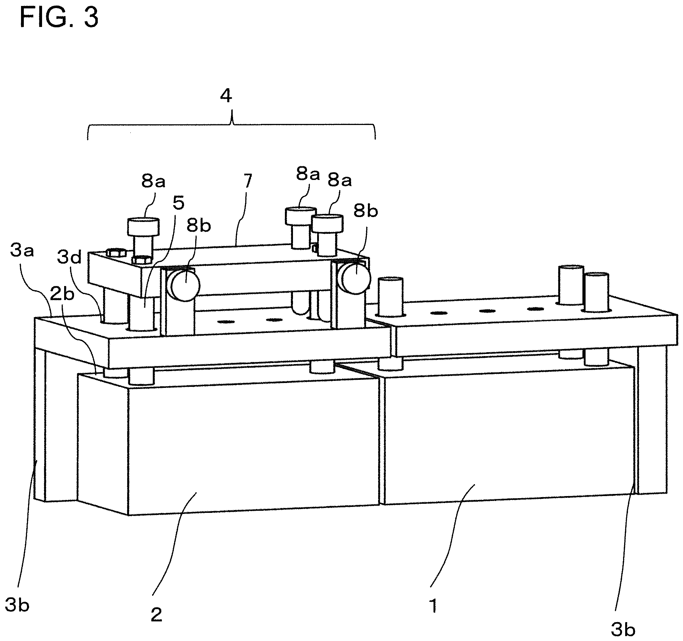

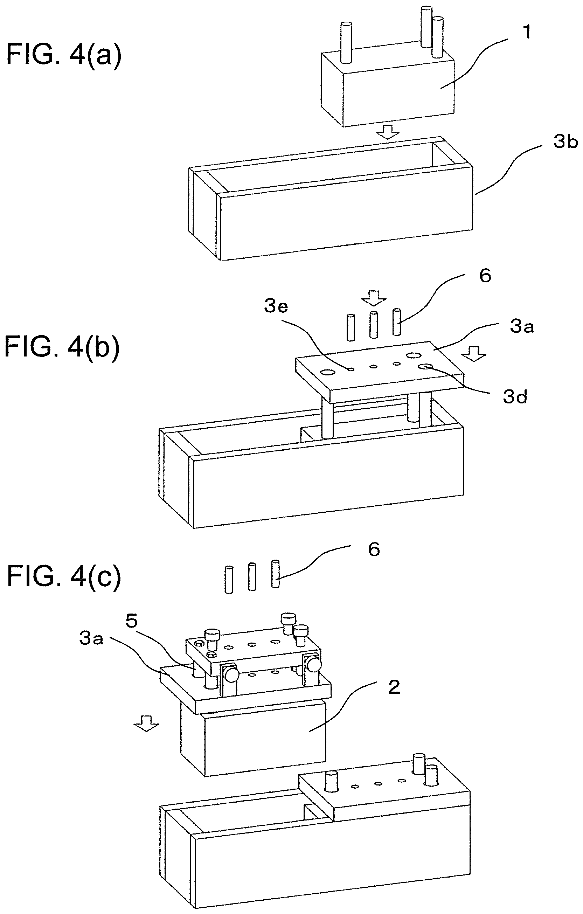

The method for manufacturing a spectroscope of the present disclosure will be described below with reference to Figs. 3 and 4.

First, the first base member 1 having the first surface 1a on which the diffraction grating is formed and the second surface 1b which is the rear surface of the first surface 1a, and the second base member 2 having the third surface 2a on which the diffraction grating is formed and the fourth surface 2b which is the rear surface of the third surface 2a are prepared.

Next, the four side plates 3b are prepared and assembled to form a frame-shaped body as shown in Fig. 4(a). By applying and drying at least a part of the outer surface of the frame-shaped body (for example, the outer surface located so as to surround the first surface 1a and the third surface 2a when the first base member 1 and the second base member 2 are inserted to the frame-shaped body) with a black paint which is composed of an acrylic resin diluted with an organic solvent as a main component, the outer surface of the frame-shaped body may be coated with the black paint.

Similarly, by applying and drying the inner surface of the frame-shaped body with a black paint which is composed of an acrylic resin diluted with an organic solvent as a main component from the first surface 1a and the third surface 2a to at least 1 mm in a depth direction, the inner surface of the frame-shaped body in the above range may be coated with the black paint.

In both cases, a mixing ratio of the black paint and the organic solvent may be 1:1 by a mass ratio, a drying temperature may be 60 °C or more and 80 °C or less, and a drying time may be 15 minutes or more and 25 minutes or less.

Next, as shown in Fig. 4(a), the first base member 1 is displaced in an internal space of the holder 3 in such a way that the second surface 1b is located on the side of the lid 3a, and the lid 3a is connected to the frame-shaped body. The frame-shaped body and the lid 3a can be connected by inserting and fastening a bolt (not shown) to a coil insert formed in advance on the lid 3a or the side plates 3b. Then, as shown in Fig. 4(b), the first base member 1 is fixed to the holder 3 via the fixing member 6 by using an adhesive (for example, 3M Scotch-Weld Epoxy Adhesive, SW9323).

The fixing member 6 for fixing the first base member 1 has, for example, the same shape and the same material as the fixing member 6 for fixing the second base member 2.

Next, the second base member 2 is inserted through the opening part of the frame-shaped body so that the fourth surface 2b is located on the side of the lid 3a, the second base member 2 is displaced in the frame-shaped body so that the first surface 1a and the third surface 2a are exposed side by side, and the lid 3a is connected to the frame-shaped body. The connection between the lid 3a and the frame-shaped body can be made in the same manner as in the case of the lid 3a opposing the first base member 1.

Consequently, the holder 3 in which the frame-shaped body and the lid 3a are connected as shown in Fig. 3 is completed.

Fig. 3 is a perspective view showing a posture adjusting mechanism 4 having a posture adjusting member 5 and the spectroscope shown in Fig. 2.

Next, as shown in Fig. 3, the posture adjusting member 5 is attached to the fourth surface 2b through the first hole 3d. Also, in Fig. 3, a part of the side plates 3b is not shown in the same manner as in Fig. 2. A clearance for adjusting the posture is provided between the posture adjusting member 5 and the first hole 3d. The posture adjusting member 5 is a columnar member that is inserted into each of the plurality of first holes 3d. The posture adjusting mechanism 4 has the posture adjusting member 5, a plate-shaped member 7 fastened to the posture adjusting member 5, and a movable member 8 adjusting the posture of the plate-shaped member 7 by rotating itself, and the location and angle of the second base member 2 are adjusted three-dimensionally with respect to the first base member 1 fixed to the holder 3. The posture adjusting mechanism 4 shown in Fig. 3 includes three micrometer heads 8a, which are an example of the movable member 8 capable of adjusting the location and angle of the second base member 2 in a first direction (a gravity direction), and two micrometer heads 8b capable of adjusting the location and angle in a direction perpendicular to the first direction. As the micrometer heads 8a and 8b, for example, a differential micrometer head (SHSP-19) manufactured by SIGMAKOKI CO., LTD. may be used. The side of the tip end of the posture adjusting member 5 may be adhered directly to the second base member 2 by an adhesive, and the side opposed to the tip end may be fastened to the plate-shaped member 7 with bolts or the like.

Then, the angle formed by the reflected waves of the first base member 1 and the second base member 2, when parallel electromagnetic waves W are incident, is adjusted to be, for example, 1 second or less or 0.1 second or less by using the posture adjusting member 5. For example, a He-Ne laser beam is incident on the first surface 1a and the third surface 2a, and the interference fringes of both reflected waves are confirmed by an optical interferometer while turning the fine adjustment screw of the micrometer head, and the place where the interference fringes match is a fixed location of the second base member 2.

Next, the fixing member 6 is disposed between the fourth surface 2b and the second hole 3e of the second base member, and the second base member 2 is fixed to the holder 3 via an adhesive (for example, 3M Scotch-Weld epoxy adhesive, SW9323) between the inner peripheral surfaces forming the fourth surface 2b and the fixing member 6, and the fixing member 6 and the second hole 3e (Fig. 4c).

Finally, the spectroscope shown in Fig. 2 can be obtained by removing the posture adjusting member 5 from the second base member 2. By removing the posture adjusting member 5, the angle of the second base member 2 with respect to the first base member 1 is slightly reduced, but it can be set within 2 seconds.

The posture adjusting member 5 is removed after adjusting and fixing the second base member 2, but the columnar part of the posture adjusting member 5 may be left as it is.

Although the embodiments of the present disclosure have been described above, the present disclosure is not limited to the above-described embodiments, and various modifications, improvements, combinations or the like can be made without departing from the gist of the present disclosure.

### EXPLANATION OF SYMBOLS

- 1:: first base member
- 1a:: first surface
- 1b:: second surface
- 2:: second base member
- 2a:: third surface
- 2b:: fourth surface
- 3:: holder
- 3a:: lid
- 3b:: side plate
- 3d:: first hole
- 3e:: second hold
- 4:: posture adjusting mechanism
- 5:: posture adjusting member
- 6:: fixing member
- 7:: plate-shaped member
- 8:: movable member (micrometer head)
- 10:: astronomical telescope
- 100:: spectroscope

## Claims

1. A method for manufacturing a spectroscope which comprises
a first base member comprising a first surface having a diffraction grating and a second surface which is a rear surface of the first surface,
a second base member comprising a third surface having a diffraction grating and a fourth surface which is a rear surface of the third surface,
a holder comprising a lid having first holes and second holes opposed to the fourth surface, and arranging and fixing the first base member and the second base member, and
a fixing member disposed in the second hole, and connecting and fixing the fourth surface and the lid,
the method comprising:
a step of fixing the first base member to the holder,
a step of disposing the second base member to the holder,
a step of connecting a posture adjusting member, which is a part of a posture adjusting mechanism, to the fourth surface through the first hole,
a step of adjusting a location of the second base member according to a location of the first base member by using the posture adjusting mechanism,
a step of disposing the fixing member in the second hole,
a step of fixing the fourth surface and the lid via the fixing member, and
a step of removing at least a part of the posture adjusting member.

2. The method for manufacturing the spectroscope according to Claim 1, wherein the first base member and the second base member are formed by glass having a mean linear expansion coefficient within ±2×10⁻⁶/K at 40 °C to 400 °C, and the holder and the fixing member are formed by ceramics having a mean linear expansion coefficient within ±2×10⁻⁶/K at 40°C to 400 °C.

3. The method for manufacturing the spectroscope according to Claim 1 or 2, comprising a step of coating the outer surface surrounding the first surface and the third surface with a black paint made of an acrylic resin as a main component, when the first surface and the third surface are viewed in a plan view.

4. The method for manufacturing the spectroscope according to any one of Claims 1 to 3, comprising a step of coating the inner surface of the holder with a black paint containing an acrylic resin as a main component from the first surface and the third surface to at least 1 mm in a depth direction.

5. The method for manufacturing the spectroscope according to any one of Claims 1 to 4, wherein a plurality of the first holes and a plurality of the second holes are formed.

6. The method for manufacturing the spectroscope according to any one of Claims 1 to 5, wherein the fixing member and the fourth surface, and the fixing member and the lid are fixed by an adhesive, respectively.

7. A method for manufacturing an astronomical telescope by using the method for manufacturing the spectroscope according to any one of Claims 1 to 6.

8. A spectroscope comprising
a first base member comprising a first surface having a diffraction grating and a second surface which is a rear surface of the first surface,
a second base member comprising a third surface having a diffraction grating and a fourth surface which is a rear surface of the third surface,
a holder comprising a lid having first holes and second holes opposed to the fourth surface, and arranging and fixing the first base member and the second base member, and
a fixing member disposed in the second hole, connecting the fourth surface and the lid, and fixing the second base member to the holder in a noncontact manner.

9. The spectroscope according to Claim 8, wherein the first hole is a hole for inserting a posture adjusting member for adjusting at least any of the location or angle of the second base member.

10. The spectroscope according to Claim 8 or 9, wherein the first base member and the second base member are formed by glass having a mean linear expansion coefficient within ±2×10⁻⁶/K at 40 °C to 400 °C, and the holder and the fixing member are formed by ceramics having a mean linear expansion coefficient within ±2×10⁻⁶/K at 40°C to 400 °C.

11. The spectroscope according to any one of Claims 8 to 10, wherein the outer surface of the holder surrounding the first surface and the third surface has a black film made of an acrylic resin as a main component when the first surface and the third surface are viewed in a plan view.

12. The spectroscope according to any one of Claims 8 to 11, wherein the inner surface of the holder has a black film containing an acrylic resin as a main component from the first surface and the third surface to at least 1 mm in a depth direction.

13. The spectroscope according to any one of Claims 8 to 12, wherein a plurality of the first holes and a plurality of the second holes are formed.

14. The spectroscope according to any one of claims 8 to 13, wherein the fixing member and the fourth surface, and the fixing member and the lid are fixed by an adhesive, respectively.

15. An astronomical telescope comprising the spectroscope according to any one of Claims 8 to 14.
